# DEMANDE DE BREVET EUROPEEN

(11) **EP 4 293 577 A1**
(43) Date de publication de la demande: **20.12.2023**
(21) Numéro de dépôt: 23177406.8
(22) Date de dépôt: 05.06.2023
(51) Int. Cl.: G06N 3/0464, G06N 3/0495

(54) **PROCÉDÉ DE TRANSFORMATION D'UN RÉSEAU DE NEURONES ARTIFICIELS ENTRAINÉ**

(30) Priorité: 15.06.2022 FR 2205831
(71) Demandeur: STMicroelectronics (Rousset) SAS, 13790 Rousset (FR)
(72) Inventeur: FOLLIOT, Laurent, 06620 Gourdon (FR); DEMAJ, Pierre, 06200 Nice (FR)
(74) Mandataire: Casalonga

(57) **Abrégé**

Selon un aspect, il est proposé un procédé de transformation d'un réseau de neurones artificiels entraîné (TNN) comportant une couche de convolution binaire (CNV_b) suivie d'une couche de mise en commun (PL) puis d'une couche de normalisation par lot (BNL), le procédé comprenant :
- une obtention (10) du réseau de neurones artificiels entraîné (TNN), puis
- une conversion (11) du réseau de neurones artificiels entraîné (TNN) dans laquelle l'ordre des couches du réseau de neurones artificiels entraîné (TNN) est modifié en déplaçant la couche de normalisation par lot après la couche de convolution (CNV), de façon à obtenir un réseau de neurones artificiels transformé (ONN).

## Description

Des modes de réalisation et de mise en oeuvre concernent les réseaux de neurones artificiels.

Les réseaux de neurones artificiels comprennent généralement une succession de couches de neurones. Chaque couche prend en entrée des données auxquelles des poids sont appliqués et délivre en sortie des données de sortie après traitement par des fonctions d'activation des neurones de ladite couche. Ces données de sortie sont transmises à la couche suivante dans le réseau de neurones.

Les poids sont des données, plus particulièrement des paramètres, de neurones configurables pour obtenir de bonnes données en sortie des couches.

Les poids sont ajustés lors d'une phase d'apprentissage généralement supervisée, notamment en exécutant le réseau de neurones avec comme données d'entrée des données déjà classifiées d'une base de données de référence.

Les réseaux de neurones peuvent être quantifiés pour accélérer leur exécution et réduire les besoins en mémoire. En particulier, la quantification du réseau de neurones consiste à définir un format de représentation de données du réseau de neurones, tels que les poids ainsi que les entrées et les sorties de chaque couche du réseau de neurones. Les couches d'un réseau de neurones peuvent être quantifiées en flottant, en huit bits ou en binaire par exemple.

Un réseau de neurones entraîné peut ainsi comporter au moins une couche quantifiée en binaire. Les poids de ladite au moins une couche prennent alors comme valeur `0' ou '1'. Les valeurs générées par certaines couches du réseau de neurones peuvent également être binaire, et donc prendre comme valeur `0' ou '1'. Le réseau de neurones peut néanmoins présenter certaines couches, notamment une couche d'entrée et une couche de sortie, quantifiées en huit bits ou en flottants. Les couches, dites couches cachées (en anglais « hidden layers »), situées entre la couche d'entrée et la couche de sortie peuvent alors être quantifiées en binaire. Un réseau de neurones quantifié en binaire pour la plupart de ces couches peut être obtenus simplement pour identifier (classifier) un élément dans un signal physique.

Lorsque l'on souhaite développer un réseau de neurones au moins partiellement quantifié en binaire, la succession de couches est ordonnée de façon à optimiser l'entraînement du réseau de neurones. En particulier, il est courant d'utiliser une succession de couches comportant une couche de convolution suivi d'une couche de mise en commun (en anglais « pooling layer ») puis une couche de normalisation par lot (en anglais « batch normalization layer »).

Les réseaux de neurones quantifiés une fois entraînés sont intégrés dans des circuits intégrés, tels que des microcontrôleurs.

En particulier, il est possible d'utiliser un logiciel d'intégration afin d'intégrer un réseau de neurones quantifié dans un circuit intégré. Le logiciel d'intégration peut être configuré pour convertir le réseau de neurones quantifié en un réseau de neurones transformé, notamment optimisé, pour être exécuté sur un circuit intégré donné. On connaît par exemple le logiciel d'intégration STM32Cube.AI et son extension X-CUBE-AI développés par la société STMicroelectronics.

L'exécution du réseau de neurones peut demander des ressources importantes en mémoire pour stocker les poids et les données générées par le réseau de neurones (en particulier les activations). L'exécution du réseau de neurones peut également être effectué sur un nombre élevé de cycles de traitement.

Il existe donc un besoin de proposer des solutions permettant de réduire l'utilisation mémoire et le nombre de cycles requis pour l'exécution d'un réseau de neurones artificiel tout en maintenant une bonne précision du réseau de neurones.

Selon un aspect, il est proposé un procédé de transformation d'un réseau de neurones artificiels entraîné comportant une couche de convolution binaire suivie d'une couche de mise en commun puis d'une couche de normalisation par lot, le procédé comprenant :
- une obtention du réseau de neurones artificiels entraîné, puis
- une conversion du réseau de neurones artificiels entraîné dans laquelle l'ordre des couches du réseau de neurones artificiels entraîné est modifié en déplaçant la couche de normalisation par lot après la couche de convolution, de façon à obtenir un réseau de neurones artificiels transformé.

Un tel procédé permet d'intervertir la couche de mise en commun et la couche de normalisation par lot. Le déplacement de la couche de normalisation par lot ne modifie pas la précision du réseau de neurones car le fait de placer la couche de normalisation par lot après la couche de convolution est équivalent mathématiquement au fait d'avoir la couche de normalisation par lot après la couche de mise en commun. En effet, la couche de normalisation par lot effectue une transformation linéaire. Néanmoins, le déplacement de la couche de normalisation permet de réduire le temps d'exécution du réseau de neurones, en diminuant le nombre de cycles de processeur pour exécuter le réseau de neurones. Le déplacement de la couche de normalisation permet également de réduire l'occupation mémoire pour l'exécution du réseau de neurones. Ainsi, la mise en oeuvre d'un tel procédé de transformation peut permettre une optimisation du réseau de neurones artificiels entraîné en le convertissant en un réseau de neurones artificiels transformé, notamment optimisé.

Dans un mode de mise en oeuvre avantageux, la couche de normalisation par lot est fusionnée avec la couche de convolution.

De préférence, la couche de mise en commun est convertie en une couche de mise en commun binaire. L'obtention d'une couche de mise en commun binaire est permise grâce au déplacement de la couche de normalisation par lot avant la couche de mise en commun. L'utilisation d'une couche de mise en commun binaire permet de simplifier l'exécution du réseau de neurones transformé. Ainsi, le réseau de neurones transformé peut être exécuté plus rapidement.

Avantageusement, la couche de mise en commun du réseau de neurones artificiel entraîné est une couche de mise en commun maximale, et cette couche de mise en commun est converti en une couche de mise en commun maximale binaire. Une couche de mise en commun maximale binaire présente l'avantage de pouvoir être mise en oeuvre par une simple opération logique de type « ET », et peut donc être exécutée rapidement.

En variante, la couche de mise en commun du réseau de neurones artificiels entraîné est une couche de mise en commun minimale, et cette couche de mise en commun est converti en une couche de mise en commun minimale binaire. Une couche de mise en commun minimale binaire présente l'avantage de pouvoir être mise en oeuvre par une simple opération logique de type « OU », et peut donc être exécutée rapidement.

Dans un mode de mise en oeuvre avantageux, la couche de normalisation par lot du réseau de neurones artificiels entraîné et du réseau de neurones artificiels transformé est configurée pour effectuer une conversion binaire et un empaquetage des bits.

Selon un autre aspect, il est proposé un produit programme d'ordinateur comprenant des instructions qui, lorsque le programme est exécuté par un ordinateur, conduisent celui-ci à mettre en oeuvre un réseau de neurones artificiels comportant une couche de convolution binaire suivie d'une couche de normalisation par lot, puis d'une couche de mise en commun.

En particulier, il est proposé un produit programme d'ordinateur comprenant des instructions qui, lorsque le programme est exécuté par un ordinateur, conduisent celui-ci à mettre en oeuvre un réseau de neurones artificiels transformé obtenu par la mise en oeuvre d'un procédé tel que décrit précédemment.

Dans un mode de réalisation avantageux, la couche de convolution et la couche de normalisation par lot sont fusionnées.

De préférence, la couche de mise en commun est une couche de mise en commun binaire.

Avantageusement, la couche de mise en commun est une couche de mise en commun maximale binaire.

En variante, la couche de mise en commun est une couche de mise en commun minimale binaire.

Dans un mode de réalisation avantageux, la couche de normalisation par lot est configurée pour effectuer une conversion binaire et un empaquetage des bits.

Selon un autre aspect, il est proposé un microcontrôleur comprenant une mémoire dans laquelle est stocké un produit programme d'ordinateur tel que décrit précédemment, et une unité de calcul configurée pour exécuter ce produit programme d'ordinateur.

Selon un autre aspect, il est proposé un produit programme d'ordinateur comprenant des instructions qui, lorsque le programme est exécuté par un ordinateur, conduisent celui-ci à mettre en oeuvre un procédé tel que décrit précédemment.

D'autres avantages et caractéristiques de l'invention apparaîtront à l'examen de la description détaillée de modes de réalisation, nullement limitatifs, et des dessins annexés sur lesquels :
[Fig 1]
[Fig 2]

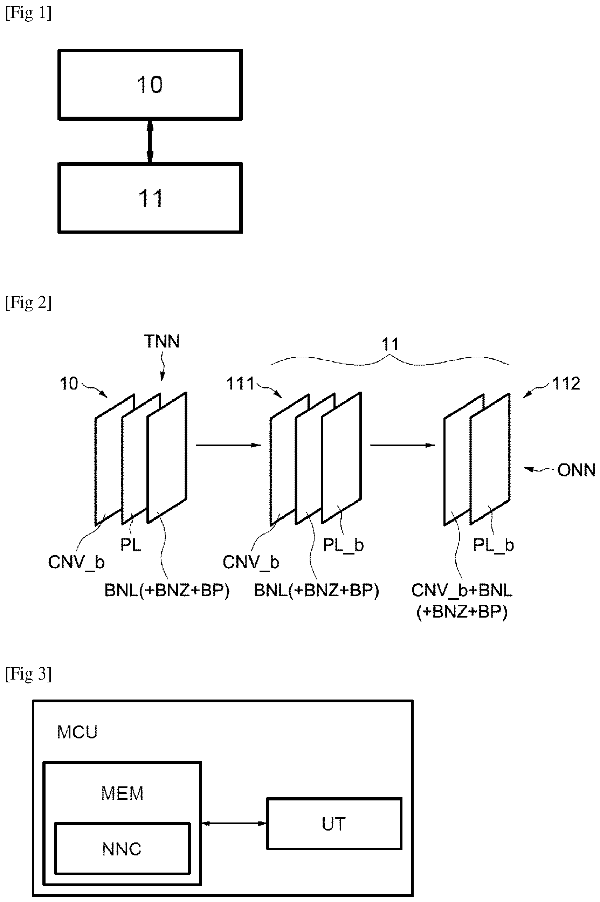

[Fig 3] illustrent des modes de réalisation et de mise en oeuvre de l'invention.

Les figures 1 et 2 illustrent un procédé de transformation d'un réseau de neurones artificiels entraîné TNN selon un mode de mise en oeuvre de l'invention.

Le procédé comporte une obtention 10, en entrée d'un logiciel d'intégration, du réseau de neurones artificiels entraîné TNN. L'entraînement sert à définir un réseau de neurones dont les performances sont optimales pour la résolution nominale et le moins dégradées possible pour la résolution réduite. Plus particulièrement, lors de l'entraînement du réseau de neurones, les poids du réseau de neurones sont ajustés, puis les performances du réseau modifié sont évaluées selon les différentes résolutions utilisées. Si les performances du réseau de neurones sont satisfaisantes, l'entraînement du réseau est arrêté. Ensuite, le réseau de neurones entraîné est fourni en entrée d'un logiciel d'intégration.

Le réseau de neurones entraîné TNN possède une succession de couches. Cette succession de couches comporte classiquement une couche de convolution CNV_b suivie d'une couche de mise en commun PL puis d'une couche de normalisation par lot BNL. Par exemple, la couche de convolution CNV_b peut être une couche de convolution 2D. La couche de convolution CNV_b est une couche binaire. La couche de mise en commun PL (en anglais « pooling layer ») peut être une couche de mise en commun maximale (« maxpool ») ou minimale (« minpool »). En particulier, la couche de mise en commun permet de combiner les sorties de la couche de convolution. La combinaison des sorties peut consister par exemple à prendre la valeur maximale (« maxPooling ») ou minimale (minpooling) des sorties de la couche de convolution. La couche de mise en commun permet de réduire la taille des cartes de sorties de la couche de convolution, tout en améliorant les performances du réseau de neurones. Le réseau de neurones entraîné peut comprendre une conversion binaire (en anglais « binarization ») et un empaquetage des bits (en anglais « bit-packing ») réalisés simultanément avec la couche de normalisation par lot BNL.

Un tel ordre des couches bien qu'optimal pour l'entraînement du réseau de neurones est moins performant pour son exécution. En effet, il est important d'avoir pour l'entraînement une couche de convolution CNV_b suivie de la couche de mise en commun PL avant la couche de normalisation par lot BNL. En particulier, la couche de normalisation par lot BNL permet d'obtenir en entrée de la couche de binarisation des données centrées réduites autour de zéro ayant une dynamique adaptée pour avoir une conversion binaire correcte. Placer la couche de normalisation par lot BNL après la couche de convolution CNV_b pose problème pour l'entraînement car la couche de normalisation par lot BNL serait effectuée sur l'ensemble des données générées en sortie de la couche de convolution CNV_b, de sorte que les données en sortie de la couche de normalisation par lot BNL seraient moins bien centrées réduites. Cela pose alors des problèmes de précision, du fait que certaines données en sortie de la couche de normalisation par lot seraient surpondérées et que d'autres données seraient perdues.

Toutefois, l'ordre des couches pour l'entraînement est moins performant pour l'exécution du réseau de neurones car il requiert une occupation mémoire importante pour stocker les données de sortie des couches, ainsi qu'un nombre important de cycles de traitement.

Afin d'optimiser le réseau de neurones entraîné, le procédé comporte ensuite une conversion 11 réalisée par le logiciel d'intégration. La conversion 11 permet de convertir le réseau de neurones entraîné TNN en un réseau de neurones transformé ONN, notamment optimisé.

La conversion comporte une réorganisation 111 des couches. La réorganisation 111 des couches correspond à une modification de l'ordre des couches du réseau de neurones.

En particulier, la couche de normalisation par lot BNL est déplacée pour succéder à la couche de convolution CNV_b. De la sorte, la couche de normalisation par lot BNL peut faire l'objet d'une fusion 112 avec la couche de convolution CNV_b. De même, la conversion binaire BNZ et l'empaquetage des bits BP sont réalisés simultanément avec la couche de normalisation par lot BNL.

Le déplacement de la couche de normalisation par lot BNL n'impacte pas la précision du réseau de neurones. Au contraire, ce déplacement permet d'améliorer les performances de l'exécution du réseau de neurones en termes de rapidité et d'occupation de mémoire. La couche de normalisation par lot BNL correspond alors à une comparaison des données en sortie de la couche de convolution CNV_b avec un seuil défini pendant l'entraînement du réseau de neurones. L'exécution d'une telle couche de normalisation par lot BNL est effectuée directement sur les données de sortie de la couche de convolution CNV_b, sans nécessité de nouveaux accès en mémoire.

Le déplacement 111 de la couche de normalisation par lot BNL permet de modifier la couche de mise en commun PL par une couche de mise en commun binaire PL_b. La couche de mise en commun binaire PL_b peut être une couche de mise en commun maximale binaire ou une couche de mise en commun minimale binaire.

Une couche de mise en commun maximale binaire peut être mise en oeuvre par une simple opération logique de type « ET ».

Une couche de mise en commun minimale binaire peut être mise en oeuvre par une simple opération logique de type « OU ».

Plus particulièrement, la sortie de la couche de mise en commun maximale binaire peut être calculée par l'expression logique suivante :
MaxPool = [(A ^ Mask) & (B ^ Mask)] ^ Mask, où le symbole '^' correspond à une opération logique de type 'OU EXCLUSIF' (`XOR'), le symbole '&' correspond à une opération logique de type `ET', `Mask' correspond à un masque prenant pour valeur `0' lorsqu'un paramètre de mise à l'échelle de la normalisation par lot est positif et pour valeur '1' lorsque le paramètre de mise à l'échelle de la normalisation par lot est négatif.

La sortie de la couche de mise en commun minimale binaire peut être calculée par l'expression logique suivante :
MinPool = [(A ^ Mask) | (B ^ Mask)] ^ Mask, où le symbole '^' correspond à une opération logique de type 'OU EXCLUSIF' (`XOR'), le symbole 'l' correspond à une opération logique de type 'OU', `Mask' correspond à un masque prenant pour valeur `0' lorsque le paramètre de mise à l'échelle de la normalisation par lot est positif et pour valeur '1' lorsque le le paramètre de mise à l'échelle de la normalisation par lot est négatif.

En cas de remplissage (en anglais « pool padding ») de la couche de mise en commun PL_b, le masque est utilisé pour initialiser les valeurs de remplissage.

La sortie de la couche de mise en commun PL_b présente l'avantage de pouvoir être obtenue par une simple boucle de calcul.

Un tel procédé permet d'obtenir un réseau de neurones transformé ONN. En particulier, le déplacement de la couche de normalisation par lot BNL ne modifie pas la précision du réseau de neurones car le fait de placer la couche de normalisation par lot BNL après la couche de convolution CNV_b est équivalent mathématiquement au fait d'avoir la couche de normalisation par lot après la couche de mise en commun. En effet, la couche de normalisation par lot BNL effectue une transformation linéaire. Au contraire, le déplacement de la couche de normalisation permet de réduire le temps d'exécution du réseau de neurones, en diminuant le nombre de cycles de processeur pour exécuter le réseau de neurones. Le déplacement de la couche de normalisation par lot permet également de réduire l'occupation mémoire pour l'exécution du réseau de neurones.

Le réseau de neurones transformé est intégré dans un programme d'ordinateur NNC. Ce programme d'ordinateur comprend alors des instructions qui, lorsque le programme est exécuté par un ordinateur, conduisent celui-ci à mettre en oeuvre le réseau de neurones transformé.

En particulier, le réseau de neurones transformé peut être embarqué dans un microcontrôleur. Comme illustré à la figure 3, un tel microcontrôleur présente alors une mémoire MEM configurée pour stocker le programme NNC du réseau de neurones transformé, et une unité de traitement UT configurée pour exécuter le réseau de neurones transformé.

Le procédé décrit précédemment en relation avec les figures 1 et 2 peut être mis en oeuvre par un autre programme d'ordinateur, ce programme d'ordinateur étant intégré dans le logiciel d'intégration. Dans ce cas, le programme d'ordinateur comprend alors des instructions qui, lorsque le programme est exécuté par un ordinateur, conduisent celui-ci à mettre en oeuvre le procédé décrit précédemment.

## Revendications

1. Procédé de transformation d'un réseau de neurones artificiels entraîné (TNN) comportant une couche de convolution binaire (CNV_b) suivie d'une couche de mise en commun (PL) puis d'une couche de normalisation par lot (BNL), le procédé comprenant :
- une obtention (10) du réseau de neurones artificiels entraîné (TNN), puis
- une conversion (11) du réseau de neurones artificiels entraîné (TNN) dans laquelle l'ordre des couches du réseau de neurones artificiels entraîné (TNN) est modifié en déplaçant la couche de normalisation par lot après la couche de convolution (CNV), de façon à obtenir un réseau de neurones artificiels transformé (ONN).

2. Procédé selon la revendication 1, dans lequel la couche de normalisation par lot (BNL) est fusionnée avec la couche de convolution (CNV_b).

3. Procédé selon l'une des revendication 1 ou 2, dans lequel la couche de mise en commun (PL) est converti en une couche de mise en commun binaire (PL_b).

4. Procédé selon la revendication 3 dans lequel la couche de mise en commun (PL) du réseau de neurones artificiel entraîné (TNN) est une couche de mise en commun maximale, et dans lequel cette couche de mise en commun (PL) est converti en une couche de mise en commun maximale binaire (PL_b).

5. Procédé selon la revendication 3 dans lequel la couche de mise en commun (PL) du réseau de neurones artificiels entraîné est une couche de mise en commun minimale, et dans lequel cette couche de mise en commun (PL) est convertie en une couche de mise en commun minimale binaire (PL_b).

6. Procédé selon l'une des revendications 1 à 5, dans lequel la couche de normalisation par lot (BNL) du réseau de neurones artificiels entraîné (TNN) et du réseau de neurones artificiels transformé (ONN) est configurée pour effectuer une conversion binaire et un empaquetage des bits.

7. Produit programme d'ordinateur comprenant des instructions qui, lorsque le programme est exécuté par un ordinateur, conduisent celui-ci à mettre en oeuvre un procédé selon l'une des revendications 1 à 6.

8. Produit programme d'ordinateur comprenant des instructions qui, lorsque le programme est exécuté par un ordinateur, conduisent celui-ci à mettre en oeuvre un réseau de neurones artificiels comportant une couche de convolution binaire (CNV_b) suivie d'une couche de normalisation par lot (BNL), puis d'une couche de mise en commun (PL).

9. Produit programme d'ordinateur selon la revendication 8, dans lequel la couche de convolution (CNV_b) et la couche de normalisation par lot (BNL) sont fusionnées.

10. Produit programme d'ordinateur selon l'une des revendication 8 ou 9, dans lequel la couche de mise en commun (PL) est une couche de mise en commun binaire (PL_b).

11. Produit programme d'ordinateur selon la revendication 10 dans lequel la couche de mise en commun (PL_b) est une couche de mise en commun maximale binaire.

12. Produit programme d'ordinateur selon la revendication 10 dans lequel la couche de mise en commun (PL_b) est une couche de mise en commun minimale binaire.

13. Produit programme d'ordinateur selon l'une des revendications 8 à 12, dans lequel la couche de normalisation par lot (BNL) est configurée pour effectuer une conversion binaire et un empaquetage des bits.

14. Microcontrôleur comprenant une mémoire (MEM) dans laquelle est stocké un produit programme d'ordinateur selon l'une des revendications 8 à 13, et une unité de calcul (UT) configurée pour exécuter ce produit programme d'ordinateur.
